# EUROPEAN PATENT SPECIFICATION

(11) **EP 1 583 376 B1**
(45) Date of publication and mention of the grant of the patent: **30.07.2008**
(21) Application number: 04290828.5
(22) Date of filing: 29.03.2004
(51) Int. Cl.: H04Q 7/22

(54) **System and method for providing an image**
System und Verfahren zur Bereitstellung eines Bildes
Système et procédé pour fournir une image

(43) Date of publication of application: 05.10.2005
(73) Proprietor: Orange S.A., 75505 Paris Cédex 15 (FR)
(72) Inventor: Shimer, Carl, Sommerville, MA 02143 (US)
(74) Representative: DeVile, Jonathan Mark

(56) References cited:
- WO-A-03/067890
- DE-A- 10 149 742
- GB-A- 2 393 349

## Description

### Field of the Invention

The present invention relates to systems and methods for providing an image from a first user equipment to at least a second user equipment, via a communications network. The present invention also relates to a server for providing an image from a first user equipment to at least a second user equipment via a communications network.

Embodiments of the present invention find application in providing an image to user equipment operable within a mobile communications network.

### Background of the Invention

Communications systems such as mobile communications networks have evolved to provide an increasing variety of services for users of the networks. An example of such services are those which utilise images such as digital photographic images. The photographic images can be communicated by a mobile communications network to mobile user equipment for display to the user, using for example a General Packet Radio System (GPRS). To this end, current mobile user equipment are provided with display screens for displaying such photographs, which are typically coloured. Furthermore, it is known for mobile user equipment to include a digital camera for generating photographic images which can then be communicated to other mobile user equipment or other destinations which may be arranged to display these photographs.

DE 10149742 discloses a system for displaying an image of a caller to a called party. A caller calls the called party using a telecommunications network. When a connection is being established between the caller and the called party a central server is interrogated to determine whether there is any information stored about the caller, for example a photograph of the caller. The information such as the photograph of the caller is then communicated to the called party which is reproduced for the called party.

### Summary of Invention

According to the present invention there is provided a system for providing an image from one or more of a plurality of mobile user equipment to a receiving mobile user equipment, the system comprising
a photo contact server and a mobile communications network, the mobile communications network being operable to provide a facility for establishing communications between the plurality of mobile user equipment, the receiving mobile user equipment and the photo contact server, wherein
the photo contact server is operable
to receive, from one or more of the plurality of mobile user equipment an image in association with a subscriber identity number of the mobile user equipment providing the image,
to store, for each of the one or more mobile user equipment, the image in association with the subscriber identity number of the mobile user equipment providing the image, and the receiving mobile user equipment is operable to communicate a contact list to the photo contact server, the contact list including a plurality of subscriber identity numbers, and the photo contact server is operable in response to receiving the contact list
to compare each of the subscriber identity numbers in the contact list with the subscriber identity number for each of the one or more mobile user equipment having stored images, and
if the subscriber identity number of any of the one or more mobile user equipment having stored images is present in the contact list provided by the receiving mobile user equipment, to communicate the image associated with the subscriber identity number from the list to the receiving mobile user equipment.

The contact list provides a plurality of subscriber identity numbers, the image being distributed to each user equipment identified by the subscriber identity numbers.

The system finds application in a mobile communications system, in which mobile user equipment include a facility for generating digital images, such as photographs.

Embodiments of the present invention can provide a facility for receiving a contact image from a user, for display, for example, when a call is received from that user. The user is thereby provided with a facility for displaying an image of a contact when a call is received. To provide this facility a web server, referred to as a contact server is arranged to operate with a communications network to receive and communicate images from user equipment to other user equipment.

It is known for users of mobile user equipment to maintain a list of contacts in the form of subscriber identity numbers such as telephone numbers (subscriber identity numbers). As a result, a user does not need to type in a number for a particular contact each time the user wishes to place a call to that contact number. Similarly, if a contact number is present in a mobile user equipment then it is known to display an image such as a photograph of a person associated with that number which the user has generated and stored on the mobile user equipment. Accordingly, the user is provided with a representation of the person calling which also provides an improved user experience since the user is provided with a familiar representation with which some sentiment may be attached. However, a disadvantage, which may inhibit or at least constrain the presence of images of call originators for display is that each user must create his/her own image of each contact in a contact list. Embodiments of the present invention provide a server (referred to as a contact server or a photo contact server) which is arranged to distribute an image supplied by a first user to other users, thereby improving the likelihood of images of call originators being present on user equipment. When the first user places a call to those users the first user's image can be displayed. The call originator is therefore providing the image to be displayed. Furthermore, distribution of the image can be provided as an automated process, and can be provided to a list of contacts for a user. As a result, contact images may be generally more commonly available for representing users. A user whose image is to be displayed when that user places a call to other users also has control over the image, which is to represent that user.

A user communicates an image along with a subscriber identifier number for that user to the contact server. In mobile applications the subscriber identity number will be the Mobile Subscriber ISDN number (MISIDN), although in other embodiments the subscriber identity number may be an internet address. The image for that user is then distributed to other users. The distribution is effected as a client pulling the image from the contact server, as opposed to the contact server pushing the image to the other users. To this end, the server compares a list of subscriber identity numbers provided as a contact list communicated to the server and compares the subscriber identity numbers in the contact list with subscriber identity numbers for users having posted an image to the contact server. For a pushing client, the contact list would be provided by the user wishing to distribute an image as a contact image. Accordingly, for the pushing client implementation the contact list is maintained on the contact server and the image is periodically pushed to any user on the list, which has not received that image.

An advantage is provided to the pulling client arrangement because a list of contacts for a user is not maintained on the contact server. Accordingly, legal issues regarding data protection of personal data items may not be incurred.

In some embodiments, the images may be time stamped with the effect that a relative time associated with the image from that user is provided. The association of the relative time of the image may be, for example, a time at which the image was generated (for example a photograph or video) or a relative time of receipt of the image. The relative time associated with an image can be compared with a time when a user in a contact list received an image associated with a user. Therefore an image need only be communicated if a more recent image has been provided to the contact server than an image for that user previously communicated to other users as a contact image.

Although a user may provide any image for distribution to other users for use as a contact image, the present invention finds application with distributing photographic images of a user. As such a photograph of a user can be displayed when that user places a call, so that the recipient of the call can recognise the calling party.

Various further aspects and features of the present invention are defined in the appended claims.

### Brief Description of the Drawings

Embodiments of the present invention will now be described by way of example only with reference to the accompanying drawings where like parts are provided with corresponding reference numerals and in which:
Figure 1 is a schematic block diagram of a mobile radio network operating in accordance with the GPRS standard;
Figure 2 is a schematic representation of a contact list present on a mobile user equipment;
Figure 3 is a schematic representation of user equipment and a contact server appearing in Figure 2, illustrating a process for pulling contact images from the contact server by a client user equipment;
Figure 4 is a block diagram of an example of a mobile user equipment appearing in Figures 2 and 3;
Figure 5 is a block diagram of the mobile user equipment appearing in Figure 4;
Figure 6 is a flow diagram illustrating a process in which a mobile user equipment posts a contact image on the contact server appearing in Figures 2 and 3;
Figure 7 is a flow diagram illustrating a process in which a mobile user equipment pulls contact images from the contact server appearing in Figures 2 and 3;
Figure 8 is a schematic representation of user equipment and a contact server appearing in Figure 2, illustrating a process of contact server pushing a contact image to user equipment appearing on a contact list; and
Figure 9 is a flow diagram illustrating a process in which a contact server pushed a contact image to user equipment appearing in a contact list.

### Description of the Example Embodiments

Embodiments of the present invention will be described with reference to an application, which utilises a mobile radio network. However it will be appreciated that the present invention is not limited to mobile radio networks and is applicable to other types of telecommunications networks including fixed networks.

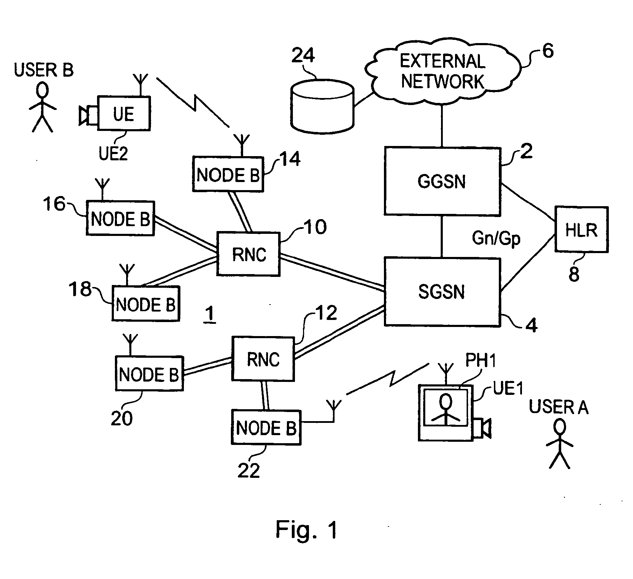

A mobile radio communications network forming a General Packet Radio System (GPRS) which is arranged to support packet data communications is illustrated in Figure 1. In Figure 1, a mobile radio communications network 1 includes a Gateway GPRS Support Node (GGSN) 2 connected to a Serving GPRS Support Node (SGSN) 4. The GGSN 2 acts as a gateway between an external packet data networks (PDN) and the mobile network 1. The GGSN 2 routes incoming data to the SGSN that is serving a particular user equipment UE1, UE2. The user equipment UE1, UE2 receive data via a radio access facility provided by for example in accordance with the Universal Terrestrial Radio Access Network (UTRAN) system which is specified in accordance with the 3GPP standard. The SGSN 4 provides mobility management of user equipment moving within an area supported by the mobile radio network. To this end, the SGSN 4 is provided with access to a Home Location Register (HLR) 8. The SGSN 4 is arranged to route data to Radio Network Controllers (RNC) 10, 12, for communication via the UTRAN radio access facility to user equipment. The UTRAN radio access facility is provided using Node B apparatus 14, 16, 18, 20, 22, which effectively form base stations providing radio coverage for the area served by the mobile telecommunications network. More details may be found in the publication entitled "GSM, CDMA1 and 3G systems" by R. Steel ET AL published by Willie ISBN 0471491853.

As shown in Figure 1, a photo contact server 24 is attached to the external network 4, although in other embodiment the photo contact server 24 may be attached at other places in the network such as the GGSN 2.

The photo contact server 24 can be implemented as a web server which can respond to an instruction from a client using the Simple Object Access Protocol (SOAP).

A mobile user equipment UE1 acting as a client which has subscribed to receive images of contacts in a contact list may be arranged to pull images or an image from the server. According to one embodiment the user equipment UE1 interrogates the photo contact server 24 with all the subscriber identity numbers in a contact list and retrieves images for any of those subscriber identity numbers which have provided images stored to the server. Therefore the user equipment acting as a client is arranged to pull images for each of the subscriber identity numbers in the contact list which have made images available on the photo contact server.

In alternative embodiments the photo contact server may be arranged to store a contact list received from each user. The contact list may be up-loaded by each of the user equipment. According to this embodiment the server is operable to push the image of a user to each of the subscriber identity numbers in the contact list for that user.

### Example Embodiments

The following section provides an illustrative example for both a pushing client embodiment and a pulling client embodiment. In this example, an image PH1 of a first user A is communicated to the photo contact server 24 by a first user equipment UE1, and the image is communicated to a second user equipment UE2 for display to a second user B, when a call is placed to the second user equipment UE2 by the first user equipment UE1.

According to one example embodiment, the image PH1 may be communicated to the photo contact server 24 via MMS or as an e-mail with the image PH1 being provided as an attachment to the e-mail. If the e-mail is sent to an address of the photo contact server 24, for example photo@orange.us, the photo contact server parses the incoming e-mail and extracts the image PH1. Since the e-mail or the MMS also provides a mobile subscriber identity number for the first user equipment UE1, then image PH1 can be stored in association with the subscriber number. In some embodiments the uploaded image PH1 may be stored with a relative time, which may be a time of receipt or alternatively a time at which the image PH1 was generated. Thus, the first user equipment UE1 may generate a time stamp identifying this relative time. Effectively, therefore, a time stamp is stored in association with the image PH1 and as will be explained shortly the time stamp may be used to provide an indication of a most current image to members of the contact list.

### Pulling Client

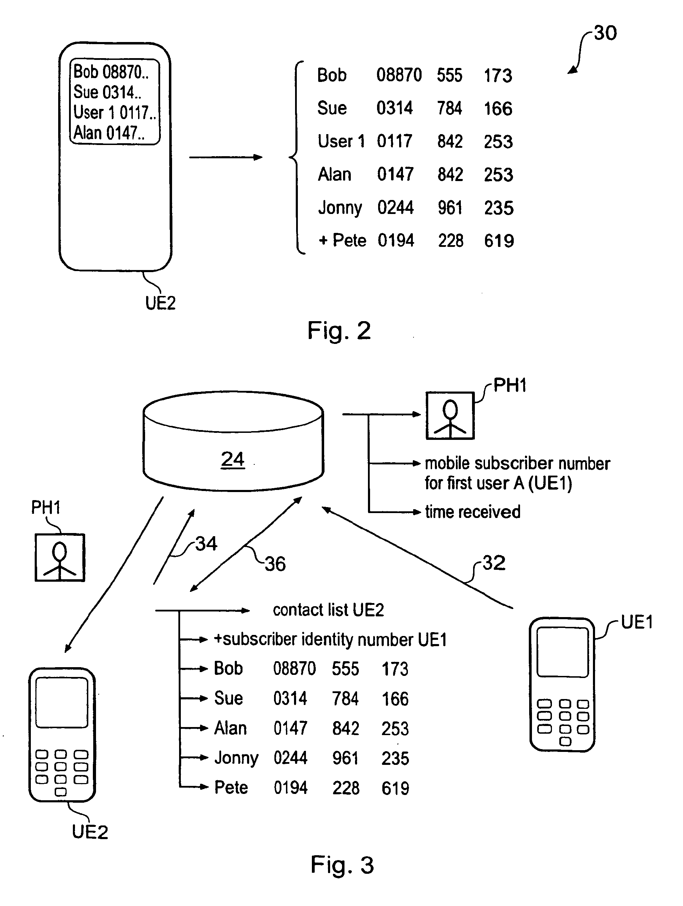

Figure 2 provides an example embodiment illustrating the second mobile user equipment UE2 operating as a pulling client. As shown in Figure 2 the second user equipment UE2 includes a list of contacts 30 which has been established by the second user B in a conventional manner. These contacts are stored locally in a data store within the second user equipment UE2.

A pulling client is arranged to communicate the contact list to the photo contact server 24 using a Simple Object Access Protocol (SOAP) command, which is a text-based standard format for providing information to a web application which, in this case, is the photo contact server (web server). Other text-based information, which may be uploaded to the server includes a time stamp of when the last image was uploaded together with a comment about the image. The photo contact server 24 is then arranged to compare the subscriber identity numbers in the list of contacts provided by the second user B with subscriber identity numbers from users who have communicated a contact image to the photo contact server 24. In response to a subscriber identity number on a contact list from the second user B matching a subscriber identity number for a user who has stored a contact image on the photo contact server 24, the photo contact server communicates the image to the user. This arrangement is illustrated in Figure 3.

As mentioned above, the first user A communicates an image representing the first user A to the photo contact server as represented by an arrow 32. As illustrated in Figure 3 by an arrow 34, the second user equipment UE2 communicates its current contact list to the photo contact server 24. As mentioned above, if the photo contact server 24 finds that a subscriber identity number on the list provided by the second user equipment UE2 matches a subscriber identity number for the first user A, then the photo contact server 24 communicates the image provided by the first user A to the second user equipment UE2. The comparison of the subscriber identity number for the first user A with the subscriber identity number in the list for user B is represented by a double headed arrow 36.

In one example embodiment the photo contact server 24 may compare a relative time when an image was received from the first user A (provided by the time stamp) with a time when a previous update of contact images for the second user B was last made. If the photo contact server 24 determines a relative time associated with an image is not more recent than a previous update of the contact images for the second user B, then the photo contact server 24 does not send the image for the first user A to the mobile user equipment UE2. Accordingly, there is not an inefficient use of communications resources for sending an image to the second user equipment UE2 when it already has the most recent image for the first user A.

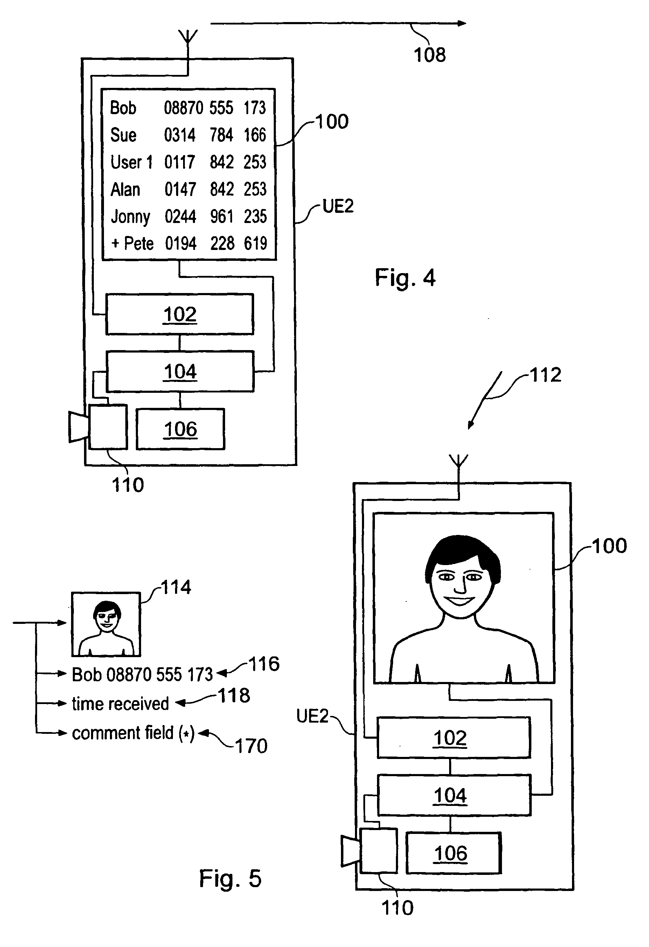

Figures 4 and 5 provide a more detailed example the second user equipment UE2 which is arranged to receive and store a contact image of the first user A from the first user equipment UE1. In Figure 4, the second user equipment UE2 is shown to include a display 100 for displaying images and a communicator 102 for communicating with other user equipment via a mobile communications interface. The second user equipment UE2 also includes a data processor 104 operable to provide a facility for a user to input subscriber identity numbers for establishing communications calls with other user equipment using the communicator 102. The subscriber identity numbers are maintained in a contact list, which is stored in a data store 106. The contact list may be displayed on the display screen 100 as shown in Figure 4. As described above, an image which may be stored in the photo contact server for each user on the contact list is pulled from the server by communicating the contact list using the communicator 102. The communication of the contact list is illustrated by a arrow 108. As shown in Figure 5, in response to the contact list being received by the photo contact server 24, the contact server communicates images for any user on the contact list, who has provided an image to the contact server. As represented in Figure 5, by an arrow 112, an image is received from the photo contact server 24 via the mobile radio network and stored in the data store 106. Data representing the image 114 of a first user A is received and stored in association with the first user A's subscriber identity number 116, with data representing a time stamp 118 and data representing a comment field 120.

The user can mark the comment field with an indication that the image for the first user A is preferred with respect to a subsequent image for the first user A. If the comment field is marked in this way, then the second user B having already established an image for the first user A which is preferred as a contact image for the first user A does not overwrite the image of first user A. Otherwise a more recent image may replace a currently used image as indicated by the time stamp.

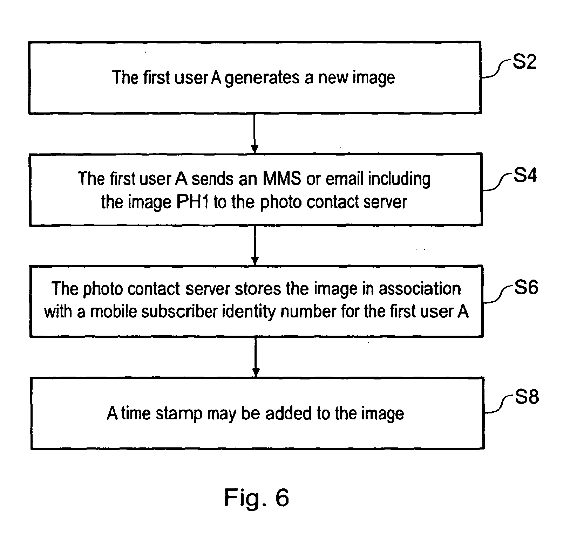

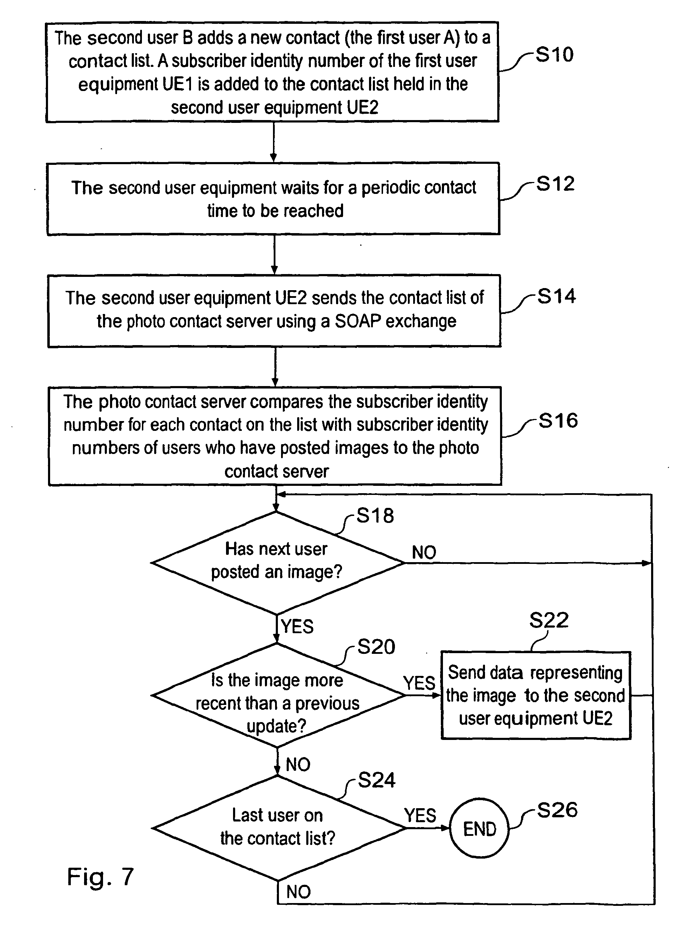

The operation of the photo contact server to provide a contact image for a user to users on a contact list for the users is summarised in the flow diagrams in Figures 6 and 7. Figure 6 provides a summary of the operation of the user to generate a new image. The flow diagram of Figure 6 is summarised as follows:
S2: The first user A generates a new image for use as a representation of the first user when a call is placed by the first user. If the first user A is using user equipment which has a built in digital camera then the image may be generated from the mobile user equipment UE1.
S4: The first user A then generates an MMS and/or e-mail and sends or attaches the image to the MMS or to the e-mail. The image is sent to the photo contact server 24 using an e-mail address such as for example photo@orange.us.
S6: The photo contact server receives the MMS or e-mail and parses the MMS or e-mail in order to identify and retrieve data representing the image. The server then stores the image in association with a mobile subscriber identity for the first user A.
S8: The image may also include a time stamp, which is added either by the first user A when the image was generated or by the photo contact server when the image was received.

The process for pulling an image for use as a contact representation of the first user A from the photo contact server is illustrated by the flow diagram provided in Figure 7. In this process the second user B adds a new contact to a contact list in this case first user A and uploads the contact list to the photo contact server 24 which is represented in Figure 3 by the arrow 34. The flow diagram in Figure 7 will now be summarised:
S10: The second user B adds a new contact to a contact list, which is contained on the first user equipment UE2. For the present example the new contact is assumed to be that for the first user A corresponding to mobile user equipment UE1.
S12: The second user equipment UE2 is arranged periodically to interrogate the photo contact server for images to be used as a contact representation for users in the second user B's contact list. The second user equipment UE2 may therefore wait for a predetermined period to expire before proceeding with further steps to pull images associated with users for contact images from the photo contact server:
   S14: The second user equipment UE2 for the second user B sends the contact list to the photo contact server 24 using a SOAP exchange of commands which are communicated via the GPRS network. Following the exchange of commands the contact list for the second user B is uploaded to the photo contact server.
   S16: The photo contact server 24 then compares the subscriber identity number for each contact in the contact list for the second user B with subscriber identity numbers of users who have posted images to the photo contact server. This comparison is represented in Figure 3 by the double-headed arrow 36.
   S18: The photo contact server 24 then determines whether a user has posted an image as a result of the comparison.
   S20: If the user has posted a image then the photo contact server compares the time stamp of the image with respect to a time when an update of the contact images in the contact list for the second user B was last made.
   S22: If the image from a user, for example the first user A, is more recent than a previous update of a contact image for the first user A, then the photo contact server sends the image PH1 of the first user A to the second user equipment UE2 for the second user B. If the user has either not posted an image or the image which has been posted has already been updated to a user with respect to the current update then no communication of an image for that user is made.
   S24: The photo contact server proceeds to determine whether the last user in the contact list has been reached. If this is the last user then at step S26 the process ends. Otherwise the process loops round to step S 18 and the next subscriber identity number on the list is compared with subscriber identity numbers within the database for which images have been posted.

One advantage provided by example embodiments in which image contacts are pulled from the photo contact server is that the server itself does not have to maintain a contact list for individual users. Accordingly, legal difficulties associated with protection of personal data are avoided because a personal contact list for each user is not held on the photo contact server 24.

### Pushing Client

According to a pushing client implementation, a user sends a list of contacts with an image to the photo contact server 24 for distribution to the list of contacts. For example, the first user A wishing to distribute an image to other user equipment, uploads the contact list from the first mobile user equipment UE1 via the network to the photo contact server 24.

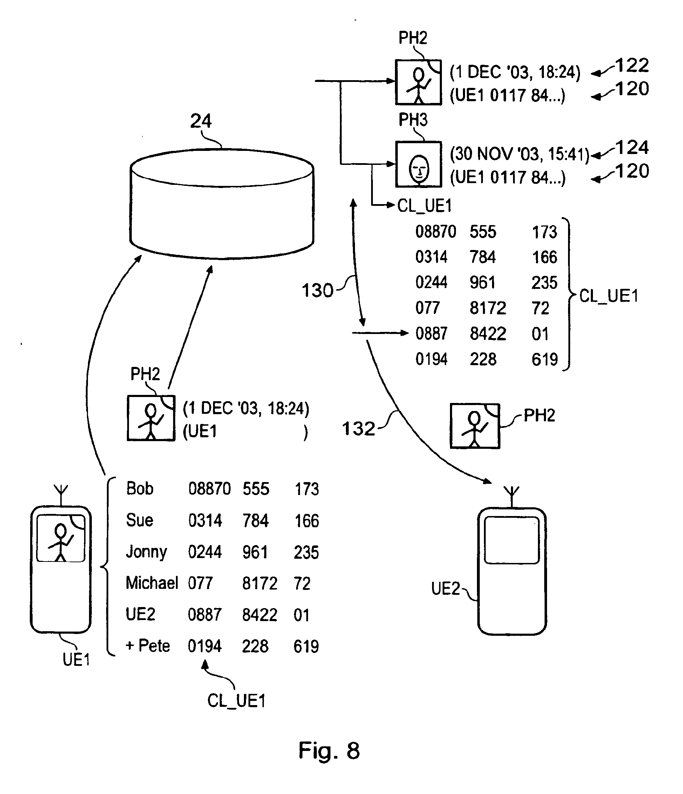

The image is downloaded to each user equipment appearing in the contact list. The downloading may be conditional upon, either an image changing or a new user being added to the contact list, if a download of an image from a user to users in a contact list has already been made. An example of the photo contact server 24, when operating to push images to clients is shown in more detail in Figure 8.

In Figure 8, the first user equipment UE1 is arranged to communicate periodically, a contact list from, for example the second user B to the photo contact server 24. Thus, unlike the pulling client example, for the pushing client a copy of the contact list is communicated to the server from the user'(the first user A) which is also providing the contact image. The contact list may be updated using a SOAP command.

Should there be a new image, such as, for example, an image PH3 generated by the first user equipment, then as mentioned above the photo is uploaded to the photo contact server 24 via MMS message or an e-mail. Thus, as illustrated in Figure 8 and the flow diagram in Figure 6, the latest image PH3 is generated by the user and uploaded to the photo contact server 24.

After receipt of a contact list from the first user A, via a SOAP instruction, the photo contact server 24 is arranged to identify the contact list for the mobile user equipment UE1 by the mobile subscriber identity number received with the contact list. The photo contact server 24 is arranged to push the image received from the first user A to each of the user equipment identified by a subscriber identifier of the first user A's contact list.

As illustrated in Figure 8, the latest image PH3 is stored in the photo contact server in association with the mobile subscriber identity number 120 of the first mobile user equipment UE1 with a time stamp 122 illustrating a time at which the image PH3 was generated. The image may also have a comment field (not shown) associated with the image PH3 which may be used to provide a description of the image or may be used to indicate whether this image should be updated when communicated to the contacts with the contact list.

As illustrated in Figure 8, a second image PH2 is also stored in the photo contact server 24 in association with a time stamp 124 and a comment field CM3. The second image PH2 represents an older image which may have been previously communicated to the user equipment in the contact list. The contact server will determine that a newer and more recent image PH3 has been loaded by the first user equipment and accordingly will push this image to each user within the contact list to update the image to be used for the user of the user equipment UE1.

As represented by a double headed arrow 130, the contact server is operable to communicate the image PH3 to each of the subscriber identity numbers on the contact list for the first user equipment UE1. For example, as illustrated by an arrow 132, the image PH3 from the first user equipment UE1 is communicated to the second user equipment UE2, because the subscriber identity number for the second user B is present in the contact list of the first user A.

As with the pulling client example, a user equipment may store in a comment field an indication that a preferred image PH2 is to be used in favour of another image PH3 received for a contact from the photo contact server.

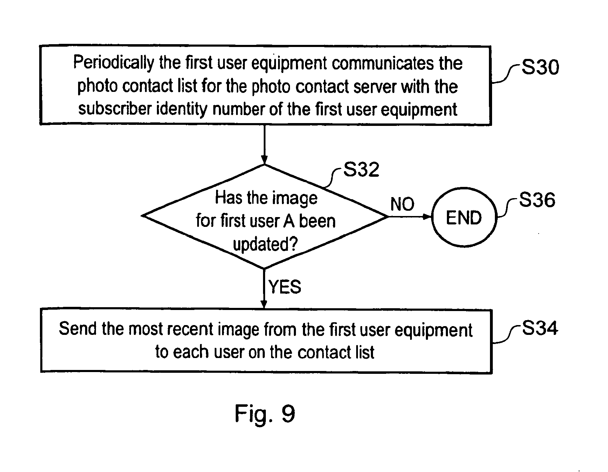

The operation of the photo contact server to provide a contact image for a user to users on a contact list for the pushing client example is summarised by the flow diagram in Figure 9. Figure 9 is summarised as follows:
S30: Periodically the first user communicates its contact list to the photo contact server together with its subscriber identity number.
S32: The contact server determines whether an image for a user has been updated more recently than the previous update of the contact list for the first user. For example, if the first user A has communicated an image PH3 to the photo contact server and a time stamp associated with the image is more recent than an image PH2 communicated during the last update of the contact list, then the image will need to be updated. Accordingly the image should be communicated to the members of the contact list.
S34: If the image is to be updated then the server communicates the current image PH2 to each user in the contact list. Communication is effected using via the GPRS network. Otherwise the process ends (S36).

In other embodiments of the invention a user may provide more than one image to be used with different contact lists. For example, a user may produce a formal photograph as a formal contact for example for use with business contacts. An informal photograph may be provided for friends or informal contacts. As such the photo contact server may include a plurality of contact lists which can be used to provide a different contact image for the users within that list. Accordingly, the user may be prompted by the user equipment to identify which list the photograph is to be associated with and the server updates the image to the user equipment in the contact list in a similar way to that described above for the single contact list.

Various modifications may be made to the embodiments herein before described without departing from the scope of the present invention as defined by the appended claims.

## Claims

1. A system for providing an image from one or more of a plurality of mobile user equipment (UE1) to a receiving mobile user equipment (UE2), the system comprising
a photo contact server (24) and a mobile communications network, the mobile communications network being operable to provide a facility for establishing communications between the plurality of mobile user equipment, the receiving mobile user equipment (UE2) and the photo contact server (24), wherein
the photo contact server (24) is operable
to receive, from one or more of the plurality of mobile user equipment (UE1) an image (PH1) in association with a subscriber identity number of the mobile user equipment (UE1) providing the image (PH1),
to store, for each of the one or more mobile user equipment (UE1), the image (PH1) in association with the subscriber identity number of the mobile user equipment (UE1) providing the image (PH1), and the receiving mobile user equipment (UE2) is operable to communicate a contact list to the photo contact server (24), the contact list including a plurality of subscriber identity numbers, and the photo contact server (24) is operable in response to receiving the contact list
to compare each of the subscriber identity numbers in the contact list with the subscriber identity number for each of the one or more mobile user equipment having stored images (PH1), and
if the subscriber identity number of any of the one or more mobile user equipment (UE1) having stored images (PH1) is present in the contact list provided by the receiving mobile user equipment (PH1), to communicate the image (UE1) associated with the subscriber identity number from the list to the receiving mobile user equipment (UE2).

2. A system as claimed in Claim 1, wherein the photo contact server (24) is operable to store the image from the one or more mobile user equipment (UE1) with a time stamp indicative of a relative time associated with the image, the photo contact server (24) being operable
in response to receiving a subsequent image from one of the mobile user equipment (UE1) providing a more recent time stamp, to communicate the image (PH1) to the receiving mobile user equipment (UE2) at the subscriber number provided from the contact list, if the time stamp associated with the image is more recent than a time stamp for an image previously sent to the receiving mobile user equipment (UE2).

3. A system as claimed in Claim 1 or 2, wherein the receiving mobile user equipment (UE2) is operable
to store an image associated with the a user with a marker field, the marker field indicating a preference for the image from the user, over another image provided by the user and received from the photo contact server (24), and
after receiving an image from the server the receiving user equipment (UE2) is operable
to determine whether the marker field for the image associated with the first user is set, and if the marker field is set, not to replace the stored image associated with the user with the image received from the server, and if the flag is not set, to replace the image associated with the user with the image associated with the user received from the photo contact server (24).

4. A system as claimed in Claim 1, 2 or 3, wherein at least one of the plurality of mobile user equipment (UE1) includes a camera and a display screen for displaying on the display screen, the image being a photographic image.

5. A photo contact server (24) for providing one or more images (PH1) from a plurality of mobile user equipment (UE1) to a receiving mobile user equipment (UE2) via a mobile communications network, the photo contact server (24) being for use with a system according to Claim 1, the photo contact server (24) being operable
to receive, from one or more of the plurality of mobile user equipment (UE1) an image (PH1) in association with a subscriber identity number of the mobile user equipment (UE1) providing the image (PH1),
to store, for each of the one or more mobile user equipment (UE1), the image (PH1) in association with the subscriber identity number of the mobile user equipment (UE1) providing the image (PH1), and
in response to receiving a contact list communicated from the receiving mobile user equipment (UE2), the contact list including a plurality of subscriber identity numbers, the photo contact server (24) is operable
to compare each of the subscriber identity numbers in the contact list with the subscriber identity number for each of the one or more mobile user equipment (UE1) having stored images (PH1), and
if the subscriber identity number of any of the one or more mobile user equipment (UE1) having stored images (PH1) is present in the contact list provided by the receiving mobile user equipment (EU1) to communicate the image (PH1) associated with the subscriber identity number from the list to the receiving mobile user equipment (UE2).

6. A photo contact server as claimed in Claim 5, wherein the photo contact server (24) is operable
to store the image (PH1) from the one or more mobile user equipment (UE1) with a time stamp indicative of a relative time associated with the image, and in response to receiving a subsequent image from the one or more mobile user equipment (UE1) providing a more recent time stamp,
to communicate the image (PH1) to the receiving mobile user equipment at the subscriber number provided from the contact list, if the time stamp associated with the image is more recent than a time stamp for an image previously sent to the receiving user equipment.

7. A mobile user equipment arranged to operate with the system according to any of Claims 1 to 4, comprising
a display (100) for displaying an image (PH1),
a communicator (102) for communicating with other user equipment via a mobile communications, and
a data processor (104) operable to provide a facility for a user to input subscriber identity numbers for establishing communications calls with other user equipment using the communicator, the subscriber identity numbers being maintained in a contact list, wherein the data processor is operable in a combination with the communicator
to communicate the contact list to a photo contact server (24) via the mobile communications network,
to receive an image (PH1) associated with a user having a subscriber number which is present in the contact list, and
to store the image (PH1) for display on the display screen (100), when a call is received from the mobile subscriber number associated with the image (24).

8. A mobile user equipment arranged to operate with the system according to any of Claims 1 to 4, comprising
an image device (110) for generating images (PH1),
a communicator (102) for communicating with other user equipment via a mobile communications network, and
a data processor (104) operable to provide a facility for a user to input subscriber identity numbers for establishing communications calls with other mobile user equipment using the communicator, the subscriber identity numbers being maintained in a contact list, wherein the data processor is operable in a combination with the communicator
to communicate the image (PH1) to a photo contact server (24) coupled to the mobile communications network, and the contact list in association with a subscriber identity number of the mobile user equipment,
to receive an image (PH1) associated with a user having a subscriber number which is present in the contact list, and
to store the image (PH1) for display on the display screen, when a call is received from the mobile subscriber number associated with the image (PH1).

9. A method for providing an image from one or more of a plurality of mobile user equipment (UE1) to a receiving mobile user equipment (UE2), the method comprising
providing a mobile communications network for establishing communications between the plurality of mobile user equipment (UE1), the receiving mobile user equipment (UE2) and a photo contact server (24),
receiving, from one or more of a plurality of mobile user equipment (UE1) an image (PH1) in association with a subscriber identity number of the mobile user equipment (UE1) providing the image (PH1),
storing, for each of the one or more mobile user equipment, the image (PH1) in association with the subscriber identity number of the mobile user equipment (UE1) providing the image (PH1),
receiving a contact list from the receiving mobile user equipment (UE2), the contact list including a plurality of subscriber identity numbers,
comparing each of the subscriber identity numbers in the contact list with the subscriber identity number for each of the one or more mobile user equipment (UE1) having stored images (PH1), and
if the subscriber identity number of any of the one or more mobile user equipment (UE1) having stored images (PH1) is present in the contact list provided by the receiving mobile user equipment (UE2),
communicating the image (PH1) associated with the subscriber identity number from the list to the receiving mobile user equipment (UE2).

10. A method as claimed in Claim 9, comprising
storing, at the receiving mobile user equipment (UE2) the image (PH1) from the one or more mobile user equipment (UE1) with a time stamp indicative of a relative time associated with the image (PH1), wherein the communicating the image (PH1) comprises
determining a relative time since the image has been sent to the receiving user with respect to a time of receipt of the image, and if the image has been more recently received than a previous image from the first user has been sent to the second user,
communicating the image (PH1) to the receiving mobile user equipment (UE2), and otherwise not communicating the image to the receiving mobile user equipment (UE2).

11. A computer program providing computer executable instructions, which when loaded onto a data processor configures the data processor to perform the method according to Claim 9 or 10,

## Patentansprüche

1. System zum Bereitstellen eines Bildes von einer oder mehreren aus einer Mehrzahl von mobilen Benutzereinrichtungen (UE1) an eine empfangende mobile Benutzereinrichtung (UE2), wobei das System aufweist:
einen Fotokontaktserver (24) und ein Mobilfunk-Kommunikationsnetz, wobei das Mobilfunk-Kommunikationsnetz so betreibbar ist, daß es eine Einrichtung zum Errichten von Kommunikationen bzw. Verbindungen zwischen der Mehrzahl von mobilen bzw. Mobilfunk-Benutzereinrichtungen, der empfangenden mobilen Benutzereinrichtung (UE2) und dem Fotokontaktserver (24) bereitstellt, wobei
der Fotokontaktserver (24) so betreibbar ist, daß er
von einer oder mehreren aus der Mehrzahl von mobilen Benutzereinrichtungen (UE1) ein Bild (PH1) in Verbindung mit einer Abonnenten-Identnummer der mobilen Benutzereinrichtung (UE1), die das Bild (PH1) bereitstellt, empfängt,
für jede der einen oder der mehreren mobilen Benutzereinrichtungen (UE1) das Bild (PH1) in Verbindung mit der Abonnenten-Identnummer der mobilen Benutzereinrichtung (UE1), die das Bild (PH1) bereitstellt, speichert, und die empfangende mobile Benutzereinrichtung (UE2) so betreibbar ist, daß sie eine Kontaktliste an den Fotokontaktserver (24) übermittelt, wobei die Kontaktliste eine Mehrzahl von Abonnenten-Identnummern beinhaltet, und der Fotokontaktserver (24) in Reaktion auf das Empfangen der Kontaktliste derart betrieben werden kann,
daß er jede der Abonnenten-Identnummern in der Kontaktliste mit der Abonnenten-Identnummer für jede der einen oder der mehreren mobilen Benutzereinrichtungen, auf denen Bilder (PH1) gespeichert sind, vergleicht, und
wenn die Abonnenten-Identnummer irgendeiner der einen oder der mehreren mobilen Benutzereinrichtungen (UE1), auf denen Bilder (PH1) gespeichert sind, in der durch die empfangende mobile Benutzereinrichtung (UE2) bereitgestellten Kontaktliste vorliegt, das mit der Abonnenten-Identnummer aus der Liste assoziierte Bild (PH1) an die empfangende mobile Benutzereinrichtung (UE2) übermittelt.

2. System nach Anspruch 1, wobei der Fotokontaktserver (24) so betreibbar ist, daß er das Bild von der einen oder den mehreren mobilen Benutzereinrichtungen (UE1) mit einem Zeitstempel, der eine relative, mit dem Bild assoziierte Zeit anzeigt, speichert, wobei der Fotokontaktserver (24) so betreibbar ist, daß er
in Reaktion auf das Empfangen eines nachfolgenden Bildes von einer der mobilen Benutzereinrichtungen (UE1), welches einen jüngeren Zeitstempel bereitstellt, das Bild (PH1) an die empfangende Benutzereinrichtung (UE2) unter der aus der Kontaktliste bereitgestellten Abonnentennummer übermittelt, wenn der mit dem Bild assoziierte Zeitstempel jünger ist als ein Zeitstempel für ein Bild, welches zuvor an die empfangende mobile Benutzereinrichtung (UE2) gesendet wurde.

3. System nach Anspruch 1 oder 2, wobei die empfangende mobile Benutzereinrichtung (UE2) so betreibbar ist, daß sie
ein mit einem Benutzer assoziiertes Bild mit einem Markierungsfeld, wobei das Markierungsfeld eine Präferenz für das Bild von dem Benutzer anzeigt, über einem anderen von dem Benutzer bereitgestellten und von dem Fotokontaktserver (24) empfangenen Bild speichert, und
nach Empfangen eines Bildes von dem Server die empfangende Benutzereinrichtung (UE2) so betreibbar ist, daß sie
bestimmt, ob das Markierungsfeld für das mit dem ersten Benutzer assoziierte Bild gesetzt ist, und wenn das Markierungsfeld gesetzt ist, das gespeicherte, mit dem Benutzer assoziierte Bild nicht durch das von dem Server empfangene Bild ersetzt, und wenn die Markierung nicht gesetzt ist, das mit dem Benutzer assoziierte Bild durch das mit dem Benutzer assoziierte, von dem Fotokontaktserver (24) empfangene Bild ersetzt.

4. System nach Anspruch 1, 2 oder 3, wobei wenigstens eine aus der Mehrzahl von mobilen Benutzereinrichtungen (UE1) eine Kamera und einen Anzeigebildschirm beinhaltet, um auf dem Anzeigebildschirm das Bild, welches ein fotografisches Bild ist, anzuzeigen.

5. Fotokontaktserver (24) zum Bereitstellen eines oder mehrerer Bilder (PH1) von einer Mehrzahl von mobilen Benutzereinrichtungen (UE1) an eine empfangende mobile Benutzereinrichtung (UE2) über ein Mobilfunk-Kommunikationsnetz, wobei der Fotokontaktserver (24) zur Verwendung mit einem System nach Anspruch 1 bestimmt ist und der Fotokontaktserver (24) so betreibbar ist, daß er
von einer oder mehreren aus der Mehrzahl von mobilen Benutzereinrichtungen (UE1) ein Bild (PH1) in Verbindung mit einer Abonnenten-Identnummer der mobilen Benutzereinrichtung (UE1), die das Bild (PH1) bereitstellt, empfängt,
für jede der einen oder der mehreren mobilen Benutzereinrichtungen (UE1) das Bild (PH1) in Verbindung mit der Abonnenten-Identnummer der mobilen Benutzereinrichtung (UE1), die das Bild (PH1) bereitstellt, speichert, und
in Reaktion auf das Empfangen einer von der empfangenden mobilen Benutzereinrichtung (UE2) übermittelten Kontaktliste, wobei die Kontaktliste eine Mehrzahl von Abonnenten-Identnummern beinhaltet, der Fotokontaktserver (24) so betreibbar ist, daß er
jede der Abonnenten-Identnummern in der Kontaktliste mit der Abonnenten-Identnummer für jede der einen oder der mehreren mobilen Benutzereinrichtungen (UE1), auf denen Bilder (PH1) gespeichert sind, vergleicht, und
wenn die Abonnenten-Identnummer irgendeiner der einen oder der mehreren mobilen Benutzereinrichtungen (UE1), auf denen Bilder (PH1) gespeichert sind, in der durch die empfangende mobile Benutzereinrichtung (UE2) bereitgestellten Kontaktliste vorliegt, das mit der Abonnenten-Identnummer aus der Liste assoziierte Bild (PH1) an die empfangende mobile Benutzereinrichtung (UE2) überträgt.

6. Fotokontaktserver nach Anspruch 5, wobei der Fotokontaktserver (24) so betreibbar ist, daß er
das Bild (PH1) von der einen oder den mehreren mobilen Benutzereinrichtungen (UE1) mit einem Zeitstempel, der eine relative, mit dem Bild assoziierte Zeit anzeigt, speichert, und in Reaktion auf das Empfangen eines nachfolgenden Bildes von der einen oder den mehreren mobilen Benutzereinrichtungen (UE1) einen jüngeren Zeitstempel bereitstellt,
das Bild (PH1) an die empfangende mobile Benutzereinrichtung unter der aus der Kontaktliste bereitgestellten Abonnentennummer übermittelt, wenn der mit dem Bild assoziierte Zeitstempel jünger ist als ein Zeitstempel für ein Bild, welches zuvor an die empfangende Benutzereinrichtung gesendet wurde.

7. Mobile Benutzereinrichtung, die so angeordnet ist, daß sie mit dem System nach einem der Ansprüche 1 bis 4 läuft und aufweist:
eine Anzeige (100) zum Anzeigen eines Bildes (PH1),
einen Kommunikator bzw. eine Kommunikationsvorrichtung (102) zum Kommunizieren mit anderen Benutzereinrichtungen über ein Mobilfunk-Kommunikationsnetz und
einen Datenprozessor (104), der so betreibbar ist, daß er eine Einrichtung für einen Benutzer für die Eingabe von Abonnenten-Identnummern bereitstellt, um Kommunikationsanrufe mit anderen Benutzereinrichtungen unter Verwendung des Kommunikators zu etablieren, wobei die Abonnenten-Identnummern in einer Kontaktliste gehalten werden, wobei der Datenprozessor in Kombination mit dem Kommunikator so betreibbar ist, daß er
die Kontaktliste über das Mobilfunk-Kommunikationsnetz an einen Fotokontaktserver (24) übermittelt,
ein mit einem Benutzer mit einer in der Kontaktliste vorliegenden Abonnentennummer assoziiertes Bild (PH1) empfängt und
das Bild (PH1) für die Anzeige auf dem Anzeigebildschirm (100), wenn ein Anruf von der mit dem Bild assoziierten Mobilfunk-Abonnentennummer empfangen wird, speichert.

8. Mobile Benutzereinrichtung, die so angeordnet ist, daß sie mit dem System nach einem der Ansprüche 1 bis 4 läuft und aufweist:
eine Abbildungsvorrichtung (110) zum Erzeugen von Bildern (PH1),
einen Kommunikator (102) zum Kommunizieren mit anderen Benutzereinrichtungen über ein Mobilfunk-Kommunikationsnetz und
einen Datenprozessor (104), der so betreibbar ist, daß er einem Benutzer eine Einrichtung für die Eingabe von Abonnenten-Identnummern bereitstellt, um Kommunikationsanrufe mit anderen mobilen Benutzereinrichtungen zu etablieren, wobei die Abonnenten-Identnummern in einer Kontaktliste gehalten werden, wobei der Datenprozessor in Kombination mit dem Kommunikator so betreibbar ist, daß er
das Bild (PH1) an einen an das Mobilfunk-Kommunikationsnetz angeschlossenen Fotokontaktserver (24) und die Kontaktliste in Verbindung mit einer Abonnenten-Identnummer der mobilen Benutzereinrichtung übermittelt,
ein mit einem Benutzer mit einer in der Kontaktliste vorliegenden Abonnentennummer assoziiertes Bild (PH1) empfängt und
das Bild (PH1) für die Anzeige auf dem Anzeigebildschirm, wenn ein Anruf von der mit dem Bild (PH1) assoziierten Mobilfunk-Abonnentennummer empfangen wird, speichert.

9. Verfahren zum Bereitstellen eines Bildes von einer oder mehreren aus einer Mehrzahl von mobilen Benutzereinrichtungen (UE1) an eine empfangende mobile Benutzereinrichtung (UE2), wobei das Verfahren umfaßt:
Bereitstellen eines Mobilfunk-Kommunikationsnetzes zum Errichten von Verbindungen zwischen der Mehrzahl von mobilen Benutzereinrichtungen (UE1), der empfangenden mobilen Benutzereinrichtung (UE2) und einem Fotokontaktserver (24),
Empfangen eines Bildes (PH1) in Verbindung mit einer Abonnenten-Identnummer der mobilen Benutzereinrichtung (UE1), die das Bild (PH1) bereitstellt, von einer oder mehreren aus einer Mehrzahl von mobilen Benutzereinrichtungen (UE1),
für jede der einen oder der mehreren mobilen Benutzereinrichtungen Speichern des Bildes (PH1) in Verbindung mit der Abonnenten-Identnummer der mobilen Benutzereinrichtung (UE1), die das Bild bereitstellt,
Empfangen einer Kontaktliste von der empfangenden mobilen Benutzereinrichtung (UE2), wobei die Kontaktliste eine Mehrzahl von Abonnenten-Identnummern beinhaltet,
Vergleichen jeder der Abonnenten-Identnummern in der Kontaktliste mit der Abonnenten-Identnummer für jede der einen oder der mehreren mobilen Benutzereinrichtungen (UE1), auf denen Bilder (PH1) gespeichert sind, und
wenn die Abonnenten-Identnummer irgendeiner der einen oder der mehreren mobilen Benutzereinrichtungen (UE1), auf denen Bilder (PH1) gespeichert sind, in der durch die empfangende mobile Benutzereinrichtung (UE2) bereitgestellten Kontaktliste vorliegt,
Übermitteln des mit der Abonnenten-Identnummer aus der Liste assoziierten Bildes (PH1) an die empfangende mobile Benutzereinrichtung (UE2).

10. Verfahren nach Anspruch 9, welches umfaßt:
Speichern des Bildes (PH1) von der einen oder den mehreren mobilen Benutzereinrichtungen (UE1) an der empfangenden mobilen Benutzereinrichtung (UE2) mit einem Zeitstempel, der eine relative, mit dem Bild (PH1) assoziierte Zeit anzeigt, wobei das Übermitteln des Bildes (PH1) umfaßt:
Bestimmen einer relativen Zeit, seit das Bild an den empfangenden Benutzer gesendet wurde, in Bezug auf einen Zeitpunkt des Empfangs des Bildes, und wenn das Bild vor kürzerer Zeit empfangen wurde, als ein vorheriges Bild von dem ersten Benutzer an den zweiten Benutzer gesendet wurde,
Übermitteln des Bildes (PH1) an die empfangende mobile Benutzereinrichtung (UE2), und ansonsten Nicht-Übermitteln des Bildes an die empfangende mobile Benutzereinrichtung (UE2).

11. Computerprogramm, welches durch einen Computer ausführbare Befehle bereitstellt, die, wenn sie auf einen Datenprozessor geladen werden, den Datenprozessor so konfigurieren, daß er das Verfahren nach Anspruch 9 oder 10 ausführt.

## Revendications

1. Système pour fournir une image à partir d'un ou plusieurs d'une pluralité d'équipements utilisateurs mobiles (UE1) à un équipement utilisateur mobile de réception (UE2), le système comprenant :
un serveur de contacts photo (24) et un réseau de communications mobiles, le réseau de communications mobiles ayant pour fonction de fournir une fonctionnalité d'établissement de communications entre la pluralité d'équipements utilisateurs mobiles, l'équipement utilisateur mobile de réception (UE2) et le serveur de contacts photo (24), dans lequel
le serveur de contacts photo (24) a pour fonction
de recevoir, d'un ou plusieurs de la pluralité d'équipements utilisateurs mobiles (UE1), une image (PH1) en association avec un numéro d'identité d'abonné de l'équipement utilisateur mobile (UE1) fournissant l'image (PH1),
de stocker, pour chacun des un ou plusieurs équipements utilisateurs mobiles (UE1), l'image (PH1) en association avec le numéro d'identité d'abonné de l'équipement utilisateur mobile (UE1) fournissant l'image (PH1), et l'équipement utilisateur mobile de réception (UE2) ayant pour fonction de transmettre une liste de contacts au serveur de contacts photo (24), la liste de contacts comprenant une pluralité de numéros d'identité d'abonnés, et le serveur de contacts photo (24) ayant pour fonction, en réponse, de recevoir la liste de contacts,
de comparer chacun des numéros d'identité d'abonnés de la liste de contacts au numéro d'identité d'abonné pour chacun des un ou plusieurs équipements utilisateurs mobiles dans lesquels sont stockées des images (PH1), et
si le numéro d'identité d'abonné de l'un quelconque des un ou plusieurs équipements utilisateurs mobiles (UE1) dans lesquels sont stockées des images (PH1) est présent dans la liste de contacts fournie par l'équipement utilisateur mobile de réception (UE2), de communiquer l'image (PH1) associée au numéro d'identité d'abonné provenant de la liste à l'équipement utilisateur mobile de réception (UE2).

2. Système selon la revendication 1, dans lequel le serveur de contacts photo (24) a pour fonction de stocker l'image provenant des un ou plusieurs équipements utilisateurs mobiles (UE1) avec un marqueur temporel représentatif d'un temps relatif associé à l'image, le serveur de contacts photo (24) ayant pour fonction,
en réponse à la réception d'une image suivante en provenance de l'un des équipements utilisateurs mobiles (UE1) fournissant un marqueur temporel plus récent, de transmettre l'image (PH1) à l'équipement utilisateur mobile de réception (UE2) au numéro d'abonné fourni à partir de la liste de contacts, si le marqueur temporel associé à l'image est plus récent qu'un marqueur temporel correspondant à une image antérieurement envoyée à l'équipement utilisateur mobile de réception (UE2).

3. Système selon la revendication 1 ou 2, dans lequel l'équipement utilisateur mobile de réception (UE2) a pour fonction
de stocker une image associée à l'utilisateur avec un champ de marqueur, le champ de marqueur indiquant une préférence pour l'image provenant de l'utilisateur, plutôt qu'une autre image fournie par l'utilisateur et reçue du serveur de contacts photo (24), et dans lequel
après avoir reçu une image du serveur, l'équipement utilisateur de réception (UE2) a pour fonction
de déterminer si le champ de marqueur correspondant à l'image associée au premier utilisateur est positionné et si le champ de marqueur est positionné, de ne pas remplacer l'image stockée associée à l'utilisateur par l'image reçue du serveur, et si l'indicateur n'est pas positionné, de remplacer l'image associée à l'utilisateur par l'image associée à l'utilisateur reçue du serveur de contacts photo (24).

4. Système selon la revendication 1, 2 ou 3, dans lequel au moins l'un de la pluralité d'équipements utilisateurs mobiles (UE1) comprend un appareil photo et un écran d'affichage pour effectuer un affichage sur l'écran d'affichage, l'image étant une image photographique.

5. Serveur de contacts photo (24) pour fournir une ou plusieurs images (PH1) provenant d'une pluralité d'équipements utilisateurs mobiles (UE1) à un équipement utilisateur mobile de réception (UE2) via un réseau de communications mobiles, le serveur de contacts photo (24) étant destiné à être utilisé avec un système selon la revendication 1, le serveur de contacts photo (24) ayant pour fonction
de recevoir, en provenance d'un ou plusieurs de la pluralité d'équipements utilisateurs mobiles (UE1), une image (PH1) en association avec un numéro d'identité d'abonné de l'équipement utilisateur mobile (UE1) fournissant l'image (PH1),
de stocker, pour chacun des un ou plusieurs équipements utilisateurs mobiles (UE1), l'image (PH1) en association avec le numéro d'identité d'abonné de l'équipement utilisateur mobile (UE1) fournissant l'image (PH1), et
en réponse à la réception d'une liste de contacts communiquée par l'équipement utilisateur mobile de réception (UE2), la liste de contacts comprenant une pluralité de numéros d'identité d'abonnés, le serveur de contacts photo (24) ayant pour fonction
de comparer chacun des numéros d'identité d'abonnés de la liste de contacts au numéro d'identité d'abonné de chacun des un ou plusieurs équipements utilisateurs mobiles (UE1) dans lesquels sont stockées des images (PH1), et
si le numéro d'identité d'abonné de l'un quelconque des un ou plusieurs équipements utilisateurs mobiles (UE1) dans lesquels sont stockées des images (PH1) est présent dans la liste de contacts fournie par l'équipement utilisateur mobile de réception (UE2), de communiquer l'image (PH1) associée au numéro d'identité d'abonné provenant de la liste à l'équipement utilisateur mobile de réception (UE2).

6. Serveur de contacts photo selon la revendication 5, dans lequel le serveur de contacts photo (24) a pour fonction
de stocker l'image (PH1) provenant des un ou plusieurs équipements utilisateurs mobiles (UE1) avec un marqueur temporel représentatif d'un temps relatif associé à l'image et, en réponse à la réception d'une image suivante des un ou plusieurs équipements utilisateurs mobiles (UE1) fournissant un marqueur temporel plus récent,
de communiquer l'image (PH1) à l'équipement utilisateur mobile de réception au numéro d'abonné fourni à partir de la liste de contacts, si le marqueur temporel associé à l'image est plus récent qu'un marqueur temporel correspondant à une image antérieurement envoyée à l'équipement utilisateur mobile de réception.

7. Équipement utilisateur mobile conçu pour fonctionner avec le système de l'une quelconque des revendications 1 à 4, comprenant :
un afficheur (100) pour afficher une image (PH1),
un dispositif de communication (102) pour communiquer avec d'autres équipements utilisateurs via une communication mobile, et
un processeur de données (104) ayant pour fonction de fournir une fonctionnalité permettant à un utilisateur d'entrer des numéros d'identité d'abonnés pour établir des appels de communications avec d'autres équipements utilisateurs en utilisant le dispositif de communication, les numéros d'identité d'abonnés étant conservés dans une liste de contacts, dans lequel le processeur de données a pour fonction, en association avec le dispositif de communication,
de communiquer la liste de contacts à un serveur de contacts photo (24) via le réseau de communications mobiles,
de recevoir une image (PH1) associée à un utilisateur ayant un numéro d'abonné qui est présent dans la liste de contacts, et
de stocker l'image (PH1) pour l'afficher sur l'écran d'affichage (100) lorsqu'un appel est reçu du numéro d'abonné mobile associé à l'image (24).

8. Équipement utilisateur mobile conçu pour fonctionner avec le système de l'une quelconque des revendications 1 à 4, comprenant :
un dispositif générateur d'images (110) pour générer des images (PH1),
un dispositif de communication (102) pour communiquer avec d'autres équipements utilisateurs via un réseau de communications mobiles, et
un processeur de données (104) ayant pour fonction de fournir une fonctionnalité permettant à un utilisateur d'entrer des numéros d'identité d'abonnés pour établir des appels de communications avec d'autres équipements utilisateurs mobiles en utilisant le dispositif de communication, les numéros d'identité d'abonnés étant conservés dans une liste de contacts, dans lequel le processeur de données a pour fonction, en association avec le dispositif de communication,
de communiquer l'image (PH1) à un serveur de contacts photo (24) relié au réseau de communications mobiles, et la liste de contacts en association avec un numéro d'identité d'abonné de l'équipement utilisateur mobile,
de recevoir une image (PH1) associée à un utilisateur ayant un numéro d'abonné qui est présent dans la liste de contacts, et
de stocker l'image (PH1) pour l'afficher sur l'écran d'affichage lorsqu'un appel est reçu du numéro d'abonné mobile associé à l'image (PH1).

9. Procédé pour fournir une image à partir d'un ou plusieurs d'une pluralité d'équipements utilisateurs mobiles (UE1) à un équipement utilisateur mobile de réception (UE2), le procédé consistant à
fournir un réseau de communications mobiles pour établir des communications entre la pluralité d'équipements utilisateurs mobiles (UE1), l'équipement utilisateur mobile de réception (UE2) et un serveur de contacts photo (24),
recevoir, des un ou plusieurs de la pluralité d'équipements utilisateurs mobiles (UE1), une image (PH1) en association avec un numéro d'identité d'abonné de l'équipement utilisateur mobile (UE1) fournissant l'image (PH1),
stocker, pour chacun des un ou plusieurs équipements utilisateurs mobiles, l'image (PH1) en association avec le numéro d'identité d'abonné de l'équipement utilisateur mobile (UE1) fournissant l'image (PH1),
recevoir une liste de contacts de l'équipement utilisateur mobile de réception (UE2), la liste de contacts comprenant une pluralité de numéros d'identité d'abonnés,
comparer chacun des numéros d'identité d'abonnés de la liste de contacts au numéro d'identité d'abonné correspondant à chacun des un ou plusieurs équipements utilisateurs mobiles (UE1) dans lesquels sont stockées des images (PH1), et
si le numéro d'identité d'abonné de l'un quelconque des un ou plusieurs équipements utilisateurs mobiles (UE1) dans lesquels sont stockées des images (PH1) est présent dans la liste de contacts fournie par l'équipement utilisateur mobile de réception (UE2),
communiquer l'image (PH1) associée au numéro d'identité d'abonné provenant de la liste à l'équipement utilisateur mobile de réception (UE2).

10. Procédé selon la revendication 9, consistant à
stocker, dans l'équipement utilisateur mobile de réception (UE2) l'image (PH1) provenant des un ou plusieurs équipements utilisateurs mobiles (UE1) avec un marqueur temporel représentatif d'un temps relatif associé à l'image (PH1), dans lequel la communication de l'image (PH1) consiste à
déterminer un temps relatif depuis que l'image a été envoyée à l'utilisateur de réception par rapport à un temps de réception de l'image et, si l'image a été reçue plus récemment qu'une image précédente ayant été envoyée par le premier utilisateur au deuxième utilisateur,
communiquer l'image (PH1) à l'équipement utilisateur mobile de réception (UE2) et, dans le cas contraire, ne pas communiquer l'image à l'équipement utilisateur mobile de réception (UE2).

11. Programme informatique fournissant des instructions exécutables par ordinateur qui, lorsqu'elles sont chargées dans un processeur de données, configure le processeur de données pour mettre en oeuvre le procédé selon la revendication 9 ou 10.
